# EUROPEAN PATENT SPECIFICATION

(11) **EP 1 800 526 B1**
(45) Date of publication and mention of the grant of the patent: **18.11.2009**
(21) Application number: 06126476.8
(22) Date of filing: 19.12.2006
(51) Int. Cl.: A01C 15/00

(54) **Agricultural machine having a flexible structure**
Landwirtschaftliche Maschine mit einer flexiblen Struktur
Machine agricole avec une structure flexible

(30) Priority: 20.12.2005 IT VA20050338
(43) Date of publication of application: 27.06.2007
(73) Proprietor: Torrico S.r.l., 36053 Gambellara (Vincenza) (IT)
(72) Inventor: Pegoraro, Luciano, 36040, SAREGO (Vicenza) (IT)
(74) Representative: Iannone, Carlo Luigi

(56) References cited:
- DE-A1- 10 359 179
- DE-A1- 19 733 359
- DE-U1- 20 306 595

## Description

The present invention relates to an agricultural machine having a flexible structure, conceived in particular for sowing, fertilizing and/or ploughing/tilling; more in particular, the invention relates to a machine for sowing and/or fertilizing, conceived for possible combination with pliable ploughing machines, and more specifically, foldable or collapsible types such as tillers, peg-tooth harrows, disk cultivators, roller harrows, etc.

Rotary tillers are already well-known, in the form of tractor-drawn agricultural machines, able to break up the soil to a shallow depth, using scarifiers, based on a central furrow-opener and tiller disk blades, connected to a floating roller mounted on a parallelogram frame and/or packer roller, cage roller, spiral and/or spike rear rollers; this type of structure is able to provide excellent soil tilling results and the best possible conditions for simultaneous or successive seeding machine passage.

Rotary tillers generally present a three-point coupling for mechanical attachment to the tractor, a triple driving gear, with central speed change, and a collapsible support frame, for compact size during transport which makes road transit faster and safer.

Modern mechanical systems are simple and extremely reliable and the total weight of new generation rotary tillers also guarantee excellent results even with medium capacity tractors and ensure a very good quality/price ratio.

As mentioned previously, rotary tillers can also be conceived with a rear coupling for mechanical attachment to a seeding machine, in order to perform sowing immediately after the soil has been turned.

On the other hand, seeding machines normally comprise a hopper, complete with feeder, to contain the seed, one or more volumetric metering systems that generally use a turbine-driven air jet distributor, and if necessary, equipped with a standard seed or fine seed selector to transport, divide and convey the seed to the listers. This also includes one or more seed bars, equipped with seed covering rakes and a centralised burying device, which are all attached to the rear rollers on the machine.

A conventional seeding machine having the technical features of the machine described in the preamble of claim 1 is also disclosed for example in DE 19733359-A1

In particular, as well as use on rotary tillers, these seeders are adaptable for use on all collapsible machines for soil preparation, and are normally mounted with a rigid steel or plastic hopper closed by a sliding mobile cover, which can assume two or three formats according to the width of the sowing furrow.

However, the hopper capacity is always limited and is never sufficient to contain enough seed for complete sowing operations, and therefore normally another hopper is fixed to the front of the tractor to provide sufficient seed for the job.

But this solution is cumbersome and requires the construction of a further feeder hopper that must be positioned at the front of the tractor, since the space at the rear is occupied by the rotary tiller structure and the sowing system. This eliminates any possible space that may be needed to attach other equipment to the tractor making it necessary to provide a hose for seed transmission along the side of the tractor, as well as mounting appropriate seed transmission systems such as fans, turbines and/or suction aspirators, with complex action requiring hydraulic and/or mechanical motors.

Naturally all these aspects imply further production and running costs, which could be advantageously reduced in some way.

Therefore, the object of the present invention is to create an agricultural machine with a flexible structure, that eliminates the disadvantages described above, and in particular, an agricultural machine that is able to till the soil in a suitable manner more easily and in a shorter time than is currently possible with traditional machines, complete with the sowing and/or distribution of granular or powder products in the soil, while at the same time providing more compact size and reduced cost compared to traditional machines, as well as acceptable self-contained product distribution while maintaining the same operational capacity.

This object is achieved with a machine according to claim 1.

Another object of the invention is to create an agricultural machine with a flexible structure, that can be adapted to all types of collapsible machines and foldable equipment used for soil tilling, whether equipped with power take-off or not.

Yet another object of the present invention is to create an agricultural machine having a flexible structure, with an extremely compact and stable structure and high safety standards, able to maintain the same operational capacity as traditional machines.

These and other objects according to the present invention are achieved with an agricultural machine with a flexible structure, according to appended claim 1; other detailed technical characteristics are described in the dependent claims.

Further characteristics and advantages of an agricultural machine with a flexible structure, according to the present invention, will be made more apparent from the following description, in relation to a preferred but not exclusive embodiment provided as an example, and to the appended schematic drawings wherein:
- Figure 1 is a complete view in perspective of an agricultural machine with a flexible structure, according to the present invention, in working position;
- Figure 2 is a front view of the agricultural machine shown in figure 1, according to the present invention;
- Figure 3 is a side view of the agricultural machine shown in figure 1, according to the present invention;
- Figure 4 is a plane view seen from above of the agricultural machine shown in figure 1, according to the present invention;
- Figure 5 is a complete view in perspective of an agricultural machine with a flexible structure, according to the present invention, in its folded configuration for transport;
- Figure 6 is a front view of the combined agricultural machine shown in figure 5, according to the present invention;
- Figure 7 is a side view of the agricultural machine shown in figure 5, according to the present invention;
- Figure 8 is a plane view seen from above of the agricultural machine shown in figure 5, according to the present invention;
- Figure 9 is a first view in perspective of an expandable hopper used on the agricultural machine with a flexible structure, according to the present invention;
- Figure 10 is a further view in perspective of the expandable hopper shown in figure 9.

First of all, it should be understood that even though the following description refers to the use of a seeding machine combined with a particular type of rotary tiller, equipped with a rotary harrow, the invention can be extended to adapt to any type of agricultural machine without any important changes to the concept of the invention, and if necessary can be combined with foldable and/or collapsible machines such as harrows, peg-tooth harrows, disk cultivators, roller harrows, etc. with foldable equipment used for soil preparation and/or ploughing.

In addition, as a single unit, the machine can be conceived solely as a machine for seeding and/or fertilizing, independent from its combination with a machine for specific use in soil preparation.

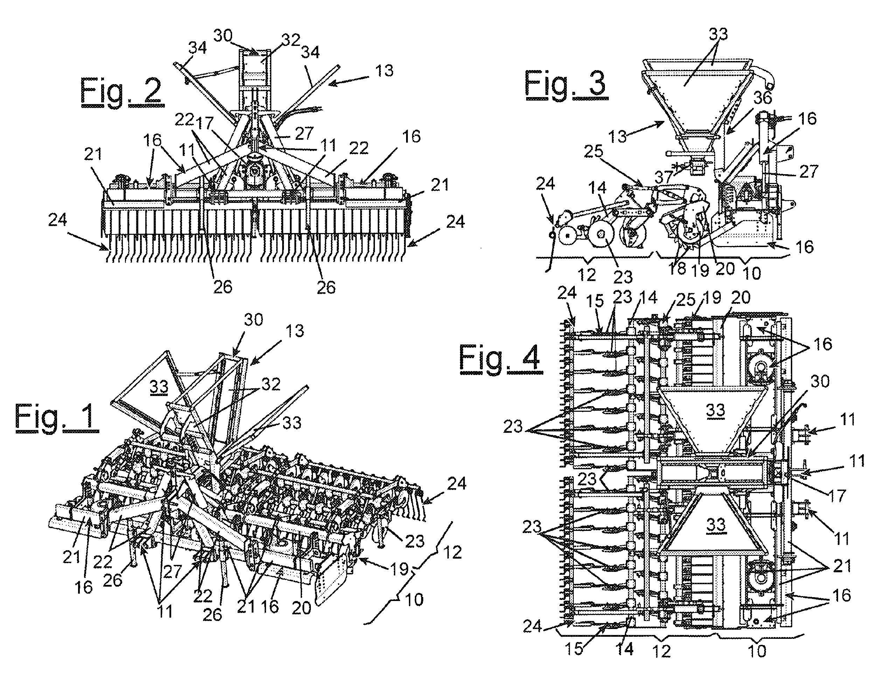

In particular reference to figures 1-5 that show an agricultural machine in detail according to the invention, where throughout the numeral 10 identifies a rotary tiller, mounted with a universal three-point coupling or link 11, for mechanical attachment to the tractor, the numeral 12 refers throughout to a seeding machine, complete with a hook-up device on the rotary tiller and on the rotary harrow, while numeral 13 refers throughout to a hopper to contain and feed the seed to the seed bar 14, arranged on the expandable parallelogram 15.

The rotary tiller 10 is composed of a foldable support frame 16, a triple drive gear with central speed change 17, and a plurality of spike or toothed disks or spiral rollers 18, contained inside a rotary harrow roller 19, mounted on the rear of the rotary tiller 10, conceived to break up the clods of soil to provide a crumbling and raking action for partial surface soil preparation. In particular, figures 1 and 4 show the construction concept of the rotary tiller 10, in a parallelogram configuration with the roller 19 attached to a support shaft or crossbar 20.

Other crossbars 21, positioned at right-angles to the travel direction of the machine are mounted to reinforce the support structure, together with further arms 22, that meet in the three-point coupling 11.

Hooked up to the rear of the rotary tiller 10 is the seeding machine 12, which incorporates an air-blowing volumetric metering system on the exterior of the hopper 13, for turbine action seed transport (Not shown in the appended figures), through a centrifugal coupling to the hopper 13, directly to the seed bar 14, furrowing ploughs 23 and seed cover rake bars 24; the seed bars 14 are fixed to rear rollers on the machine and include a centralised seed planting device (seed drill) 25 comprising a set of parallelograms and springs adjustable at various angles.

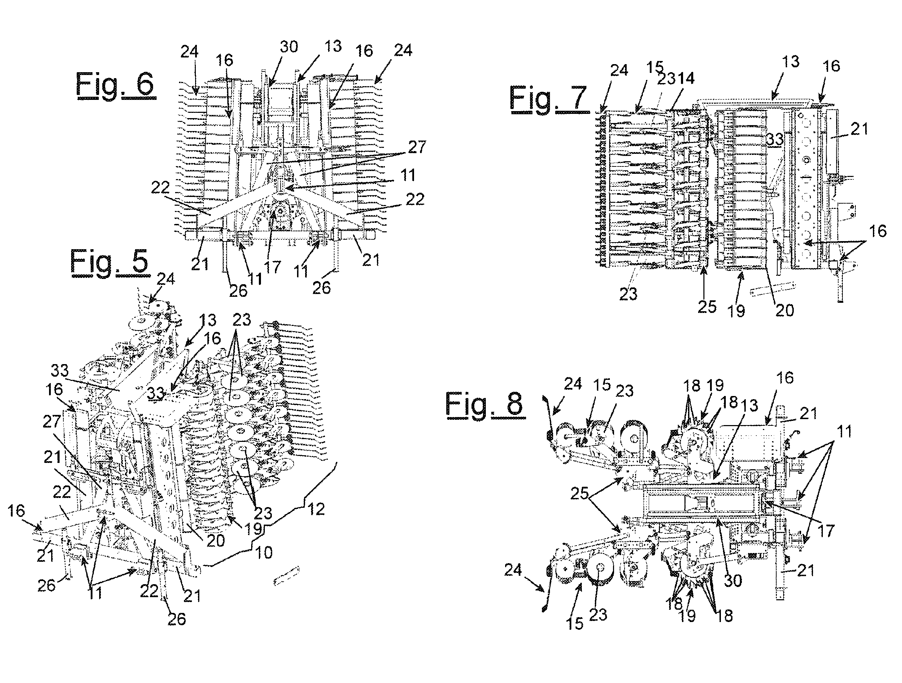

The aforesaid agricultural machine also includes a pair of support legs 26 and a hydraulic system comprising at least one pair of cylinders 27, that enables the whole structure to be folded back and loaded onto a suitable trailer for road transport; the structure of the machine folded back in this manner is shown in detail in figures 5-8.

As stated previously, according to the invention, it is possible to place the whole seed load for the seeding machine 12 into the rear hopper 13 in order to maintain free space at the front of the tractor for any other equipment that may be necessary.

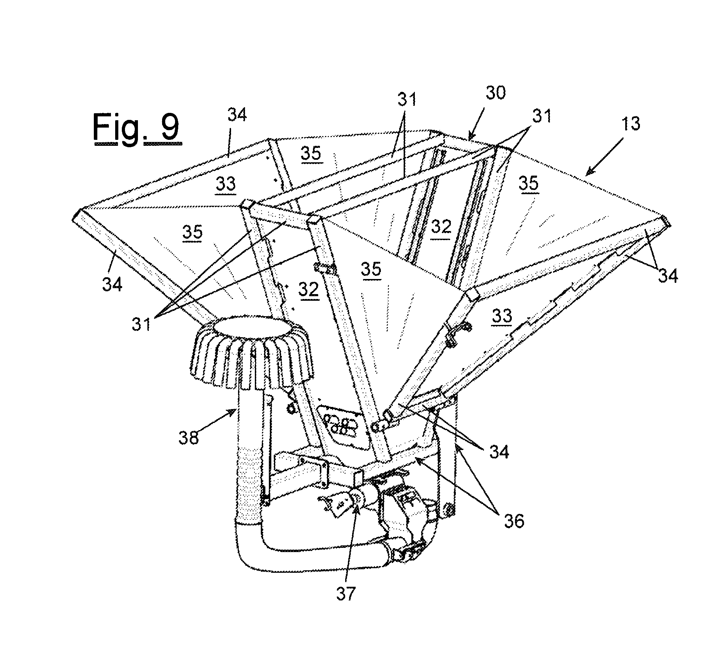

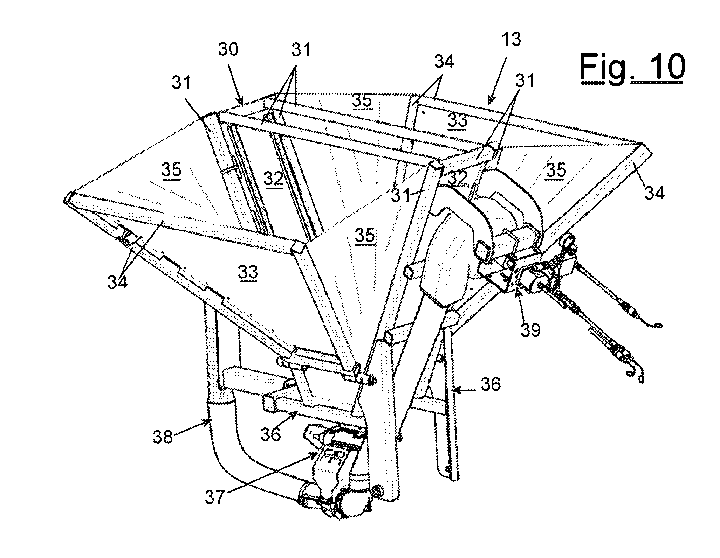

In particular, the hopper 13, which can be seen in detail in figures 9 and 10, shows its particularly compact size during machine transport, as illustrated in detail in figures 5, 6 and 8, thanks to the particular shape of the structure, set in the centre of the agricultural machine, on the support structure 36.

In addition, the hopper 13 is advantageously expandable in work position, as can be clearly noted in figures 1, 2 and 4, in order to increase the volume of the seed available during sowing operations, eliminating the need for a further seed tank (which is normally placed on the front of the tractor).

In particular, the hopper 13 comprises a central fixed frame 30, having a basically parallelepiped and/or inverted truncated pyramid shape, formed by support elements 31 and fixed walls 32, and at least two mobile walls 33, supported by another two support elements 34 and connected to the centre frame 30 by means of at least four fabric sheets 35, that enable the structure to be opened from closed position when the agricultural machine frame is folded up in rest position, and with the walls 33 adjacent to the frame 30, to the agricultural machine's open working position where the walls 33 are extended (as shown in figures 9 and 10).

As described previously, during seeding operations, the hopper 13 is able to contain a vastly increased amount of seed thanks to the considerable hopper volume that can be achieved, whereas, when almost all the seed has been distributed, a rapid discharge system 37 permits the refolding of the hopper 13 structure when the machine is closed and during transport, reducing the overall dimensions of the hopper considerably.

The hopper 13 also includes an electric seed level indicator 38 to show the amount of remaining seed in the hopper 13, and a safety device 39 conceived to prevent accidental closing of the agricultural machine 10 whenever an excess amount of seed still remains inside the hopper 13 (higher than the established quantity).

As stated previously, the aforesaid constructive solution eliminates having to place another seed tank on the front of the tractor, and therefore this free space can be used for other equipment, while maintaining a perfectly acceptable amount of seed available; lastly, as stated above, the "expandable" hopper 13 can also be used alone as a container, not only for seed, but for any kind of granular or powder product such as fertiliser, for example, while maintaining its capacity to be reduced to more compact size when necessary.

The characteristics of the combined agricultural machine with a flexible structure, object the present invention, have been made clear by the aforesaid description, as have all the relative advantages.

Finally, it is obvious that numerous variants can be applied to the agricultural machine in question, while remaining within the innovative concept of the invention, and it is also clear that in the embodiment of the invention, the materials, shapes and dimensions of the details illustrated can be of any type according to necessity and can be replaced by other elements technically equivalent.

## Claims

1. Agricultural machine having a flexible structure, comprising at least one first structure (10), suitable for soil preparation and/or trilling, which is equipped with a frame (16) foldable in an upward direction and with equipment that is collapsible when not in use, for road transport, and which is mechanically coupled to a second structure (12), suitable for seeding and/or soil fertilising, which includes at least one hopper (13), conceived to contain and/or distribute granular and/or powder products, **characterised in that** said hopper (13) has an extendible configuration and variable volume and comprises at least one mobile element, which permits volume variation of the hopper (13) by passing from a first position, in which said hopper (13) has a compact configuration suitable to be assumed when the agricultural machine is used for road transport, to a second position, suitable to be assumed during work operations of the agricultural machine, in which said hopper (13) is extended laterally to increase the volume available for said granular and/or powder products.

2. Agricultural machine according to claim 1, **characterised in that** said first structure (10) includes a harrow and/or a peg-tooth harrow and/or a disk cultivator and/or a roller harrow.

3. Agricultural machine according to claim 1, **characterised in that** said hopper (13) comprises a fixed frame (30) and mobile walls (33), connected to said fixed frame (30) by means of covering elements (35), in order to provide said extendible configuration and variable volume of the hopper (13).

4. Agricultural machine according to claim 3, **characterised in that** said fixed frame (30) of the hopper (13) is formed by first support elements (31) and fixed walls (32), while said mobile walls (33) are supported by second support elements (34) and are connected to the fixed frame (30) by means of said covering elements (35), so that said hopper (13) passes from a .closed position, according to which said frame (16) of said first structure (10) of the agricultural machine is folded and said mobile walls (33) are adjacent to said fixed frame (30) of the hopper (13), to an open position, during work operations, according to which said mobile walls (33) are extended outwards.

5. Agricultural machine according to claim 4, **characterised in that** said hopper (13) includes a rapid discharge system (37) to unload said granular and/or powder products, said discharge system (37) being activable before said mobile walls (33) passes from said open position to said closed position.

6. Agricultural machine according to claim 1, **characterised in that** said hopper (13) includes an electric product level indicator (38) and a safety device (39), which are conceived to prevent closing of said first structure (10) of the agricultural machine whenever an amount of said granular and/or powder products, which is higher than a prefixed quantity, is contained inside the hopper (13).

## Patentansprüche

1. Landwirtschaftliche Maschine mit einer flexiblen Struktur, umfassend zumindest eine erste Struktur (10), geeignet zur Boden-Präparation und/oder -Bearbeitung, die ausgestattet ist mit einem Rahmen (16), klappbar in Aufwärtsrichtung, und mit einer Ausstattung, die zusammenklappbar ist, wenn nicht im Einsatz, zum Straßentransport, und die mechanisch gekoppelt ist an eine zweite Struktur (12), geeignet zum Säen und/oder Bodendüngen, die zumindest einen Behälter (13) umfasst, vorgesehen, um granulare und/oder pulverförmige Produkte zu beinhalten und/oder zu verteilen, **dadurch gekennzeichnet, dass** der Behälter (13) eine aufweitbare Konfiguration und ein variables Volumen aufweist und zumindest ein mobiles Element umfasst, ermöglichend eine Volumenvariation des Behälters (13) mittels Gelangens von einer ersten Position, bei der der Behälter (13) eine kompakte Konfiguration aufweist, geeignet, um angenommen zu werden, wenn die landwirtschaftliche Maschine verwendet wird zum Straßentransport, zu einer zweiten Position, geeignet, um angenommen zu werden während Arbeitsbetätigungen der landwirtschaftlichen Maschine, bei der der Behälter (13) lateral aufgeweitet ist, um das Volumen, bereitstehend für die granularen und/oder pulverförmigen Produkte, zu erhöhen.

2. Landwirtschaftliche Maschine gemäß Anspruch 1, **dadurch gekennzeichnet, dass** die erste Struktur (10) eine Egge und/oder eine Zinken-Zahn-Egge und/oder einen Scheibenkultivator und/oder eine Walzenegge umfasst.

3. Landwirtschaftliche Maschine gemäß Anspruch 1, **dadurch gekennzeichnet, dass** der Behälter (13) einen fixierten Rahmen (30) und mobile Wände (33) umfasst, verbunden mit dem fixierten Rahmen (30) mittels Abdeckelementen (35), um die aufweitbare Konfiguration und das variable Volumen des Behälters (13) bereitzustellen.

4. Landwirtschaftliche Maschine gemäß Anspruch 3, **dadurch gekennzeichnet, dass** der fixierte Rahmen (30) des Behälters (13) ausgebildet wird durch erste Stützelemente (31) und fixierte Wände (32), während die mobilen Wände (33) gestützt werden durch zweite Stützelemente (34) und verbunden sind mit dem fixierten Rahmen (30) mittels den Abdeckelementen (35), so dass der Behälter (13) von einer geschlossenen Position, gemäß welcher der Rahmen (16) der ersten Struktur (10) der landwirtschaftlichen Maschine geklappt ist und die mobilen Wände (33) benachbart dem fixierten Rahmen (30) des Behälters (13) befindlich sind, zu einer geöffneten Position während Arbeitsbetätigungen, gemäß welcher die mobilen Wände (33) nach außen aufgeweitet sind, gelangt.

5. Landwirtschaftliche Maschine gemäß Anspruch 4, **dadurch gekennzeichnet, dass** der Behälter (13) ein Schnellentladungssystem (37) umfasst, um die granularen und/oder pulverförmigen Produkte zu entladen, wobei das Entladesystem (37) aktivierbar ist, bevor die mobilen Wände (33) von der geöffneten Position zu der geschlossenen Position gelangen.

6. Landwirtschaftliche Maschine gemäß Anspruch 1, **dadurch gekennzeichnet, dass** der Behälter (13) einen elektrischen Produkt-Level-Indikator (38) und eine Sicherheitsvorrichtung (39) umfasst, die vorgesehen sind, um ein Schließen der ersten Struktur (10) der landwirtschaftlichen Maschine zu verhindern, immer wenn eine Menge der granularen und/oder pulverförmigen Produkte, die höher ist als ein vorbestimmtes Maß, in dem Behälter (13) enthalten ist.

## Revendications

1. Machine agricole ayant une structure flexible, comprenant au moins une première structure (10), convenant à la préparation et/ou au travail du sol, qui est équipée d'un châssis (16) pliable vers le haut et d'un équipement rabattable en position de non-utilisation, pour le transport sur route, et qui est mécaniquement couplée à une seconde structure (12), convenant à l'ensemencement et/ou à la fertilisation du sol, qui comprend au moins une trémie (13), conçue pour contenir et/ou distribuer des produits en grains et/ou en poudre, **caractérisée en ce que** ladite trémie (13) présente une configuration extensible et un volume variable et comprend au moins un élément mobile qui permet une variation du volume de la trémie (13) en passant d'une première position dans laquelle ladite trémie (13) a une configuration compacte réalisable lorsque la machine agricole est utilisée pour le transport routier, à une seconde position pouvant être prise pendant les opérations de travail de la machine agricole, dans laquelle ladite trémie (13) est déployée latéralement pour augmenter le volume disponible pour lesdits produits en grains et/ou en poudre.

2. Machine agricole selon la revendication 1, **caractérisée en ce que** ladite première structure (10) comprend une herse et/ou une herse à dents rigides et/ou un cultivateur à disques et/ou une herse à rouleau.

3. Machine agricole selon la revendication 1, **caractérisée en ce que** ladite trémie (13) comprend un châssis fixe (30) et des parois mobiles (33), reliées audit châssis (30) au moyen d'éléments de recouvrement (35) afin de réaliser ladite configuration extensible et le volume variable de la trémie (13).

4. Machine agricole selon la revendication 3, **caractérisée en ce que** ledit châssis fixe (30) de la trémie (13) est formé par des premiers éléments support (31) et des parois fixes (32), tandis que lesdites parois mobiles (33) sont supportées par de seconds éléments support (34) et sont reliées au châssis fixe (30) au moyen desdits éléments de recouvrement (35) de façon que ladite trémie (13) passe d'une position fermée, selon laquelle ledit châssis (16) de la première structure (10) de la machine agricole est plié et lesdites parois mobiles (33) sont adjacentes audit châssis fixe (30) de la trémie (13), à une position ouverte, pendant les opérations de travail, selon laquelle lesdites parois mobiles (33) sont déployées vers l'extérieur.

5. Machine agricole selon la revendication 4, **caractérisée en ce que** ladite trémie (13) comprend un système d'évacuation rapide (37) pour décharger lesdits produits en grains et/ou en poudre, ledit système d'évacuation (37) pouvant être activé avant que lesdites parois mobiles (33) ne passent de ladite position ouverte à ladite position fermée.

6. Machine agricole selon la revendication 1, **caractérisée en ce que** ladite trémie (13) comprend un indicateur de niveau de produit de type électrique (38) et un dispositif de sécurité (39), qui sont conçus pour empêcher la fermeture de ladite première structure (10) de la machine agricole chaque fois qu'une quantité de produits en grains et/ou en poudre qui est supérieure à une quantité prédéterminée, est contenue à l'intérieur de la trémie (13).
